# EUROPEAN PATENT APPLICATION

(11) **EP 2 456 242 A1**
(43) Date of publication of application: **23.05.2012**
(21) Application number: 10306283.2
(22) Date of filing: 23.11.2010
(51) Int. Cl.: H04W 12/02, H04L 29/06

(54) **Communication involving a network and a terminal**

(71) Applicant: Alcatel Lucent, 75007 Paris (FR)
(72) Inventor: Urie, Alistair, 78141 Velizy (FR)
(74) Representative: den Braber, Gerard Paul

(57) **Abstract**

A communication that involves a network (NW) and a terminal (TM) comprises the following operations. In an initialization phase, the network and the terminal are provided with a definition of a set of identifiers (SQ) that is uniquely associated with the terminal. In a communication phase, respective identifiers of the set are used for respective communication sessions of the terminal via the network. The network recognizes a received message comprising an identifier from the set as a message originating from the terminal. The terminal recognizes a received message comprising an identifier from the set as a message addressed to the terminal.

## Description

### FIELD OF THE INVENTION

An aspect of the invention relates to a method of communication that involves a network and a terminal. The method may be used, for example, in a communication system that is based on a mobile communication specification, such as a 3GPP specification (3GPP is an acronym for third Generation Partnership Project). Other aspects of the invention relate to a terminal-servicing section of a network, a terminal, an identifier module for use in a terminal, and a computer program product.

### BACKGROUND OF THE INVENTION

A communication that involves a network and a terminal typically requires that the terminal can uniquely be identified among all terminals that may potentially use the network. In a GSM system (GSM is an acronym for Global System for Mobile Communications), the network assigns a so-called temporary mobile subscriber identity (TMSI) to a terminal that is in a geographical area covered by a mobile switching center (MSC). The temporary mobile subscriber identity is used for exchanging messages between the terminal and the network, at least as long as a dedicated secure channel has not yet been assigned to the terminal.

For example, in a call setup procedure, where the terminal seeks to establish an outgoing call, there is an initial exchange of messages between the network and the terminal. One or more of these messages may include the temporary mobile subscriber identity. In a call setup procedure, where the network seeks to establish an incoming call for the terminal, the network transmits paging messages via a paging channel. These paging messages include the temporary mobile subscriber identity so that the terminal can identify these paging messages as being addressed to the terminal.

The temporary mobile subscriber identity is typically maintained as long as the terminal communicates remains within the geographical area covered by the mobile switching center. That is, a new temporary mobile subscriber identity is typically assigned only when the terminal has moved so that the terminal is within another geographical area that is covered by another mobile switching center. That is, a change in mobile switching centers entails a change of temporary mobile subscriber identity. Otherwise, the temporary mobile subscriber identity is maintained and is transmitted during call setup procedures and location update procedures.

### SUMMARY OF THE INVENTION

There is a need for a solution that allows a relatively high degree of security and privacy in a communication that involves a network and a terminal. In order to better address this need, the following points have been taken into consideration.

Conventional communication methods that use a temporary mobile subscriber identity offer only a relatively modest degree of security and privacy. For example, displacements of a user of a terminal can be tracked in the following manner. The user can be physically identified. It is waited for the user to set up or to receive a call. The terminal then transmits a currently applicable temporary mobile subscriber identity as part of a call setup procedure. An observer could than associate the currently applicable temporary mobile subscriber identity with the user who has physically been identified. Subsequently, the user's displacements can be tracked by detecting locations where this same temporary mobile subscriber identity is transmitted. For example, this technique can be used to monitor customer behavior in shopping centers without customers being aware of this. The tracking technique can be successful because the currently applicable temporary mobile subscriber identity will typically be maintained for a sufficiently long period of time.

In accordance with an aspect of the invention, a method of communication that involves a network and a terminal comprises:
- an initialization phase in which the network and the terminal are provided with a definition of a set of identifiers that is uniquely associated with the terminal; and
- a communication phase in which respective identifiers of the set are used for respective communication sessions of the terminal via the network, the network recognizing a received message comprising an identifier from the set as a message originating from the terminal, the terminal recognizing a received message comprising an identifier from the set as a message addressed to the terminal.

Accordingly, since different identifiers are used in successive communication sessions, it will be difficult, or even impossible, to track user displacements that may occur between the communication sessions. Since the network and the terminal share the same set of identifiers, which is uniquely associated with the terminal, use of different identifiers in successive communication sessions do not prevent correct identification of the terminal.

An embodiment of the invention advantageously comprises one or more of the following additional features, which are described in separate paragraphs. These additional features each contribute to achieving a relatively high degree of security and privacy.

In the initialization phase, the set of identifiers is advantageously defined as a pseudorandom sequence.

In the initialization phase, the terminal advantageously receives an identifier from the pseudorandom sequence of identifiers and initializes a pseudorandom generator with the identifier received, which enables the pseudorandom generator to generate the pseudorandom sequence of identifiers.

In the initialization phase, a secured center advantageously generates the pseudorandom sequence of identifiers, and transmits this pseudorandom sequence to a terminal-servicing section of the network via which the terminal accesses the network.

In the communication phase, a terminal-servicing section of the network advantageously replaces an identifier of the set that the terminal has used for transmitting a message, by a network-internal identifier that is maintained throughout respective communication sessions, the terminal-servicing section transferring the message with the network-internal identifier to another, message handling section of the network.

A request for a new set of identifiers is advantageously generated when a given number of identifiers from a current set have been used for messages exchanged between the terminal and the network.

In the communication phase, identifiers from the current set are advantageously reused in case a new set of identifiers has not been provided when all the identifiers of the current set have been used; otherwise identifiers from the new set are used at the latest when all the identifiers of the current set have been used.

Advantageously, verification is made whether the following condition is satisfied, or not: each identifier from the set of identifiers is different from any identifier of any other set of identifiers associated with another terminal.

In case the aforementioned condition is not satisfied, a new set of identifiers may be requested for replacement of the set of identifiers for which the condition is not satisfied.

In case the aforementioned condition is not satisfied, the set of identifiers for which the condition is not satisfied may be partially used in the communication phase, whereby an identifier that corresponds with an identifier from another set is excluded from use for messages exchanged between the terminal and the network in the communication phase.

In the communication phase, a predefined trigger event advantageously causes a subsequent identifier from the set to be used for messages exchanged between the terminal and the network.

For the purpose of illustration of the invention summarized hereinbefore, as well as the additional features, a detailed description of particular embodiments is provided with reference to drawings.

### BRIEF DESCRIPTION OF THE DRAWINGS

FIG. 1 is a block diagram that illustrates a communication system, which comprises a network and a terminal.
FIG. 2 is a flow chart diagram that illustrates a series of steps that the network and the terminal carry out in an initialization phase.
FIG. 3 is a flow chart diagram that illustrates a series of steps that the network and the terminal carry out in a communication phase for exchanging messages.
FIG. 4 is a flow chart diagram that illustrates a further series of steps that a network and the terminal carry out in a communication phase for managing pseudorandom identifiers used for exchanging messages.

### DETAILED DESCRIPTION

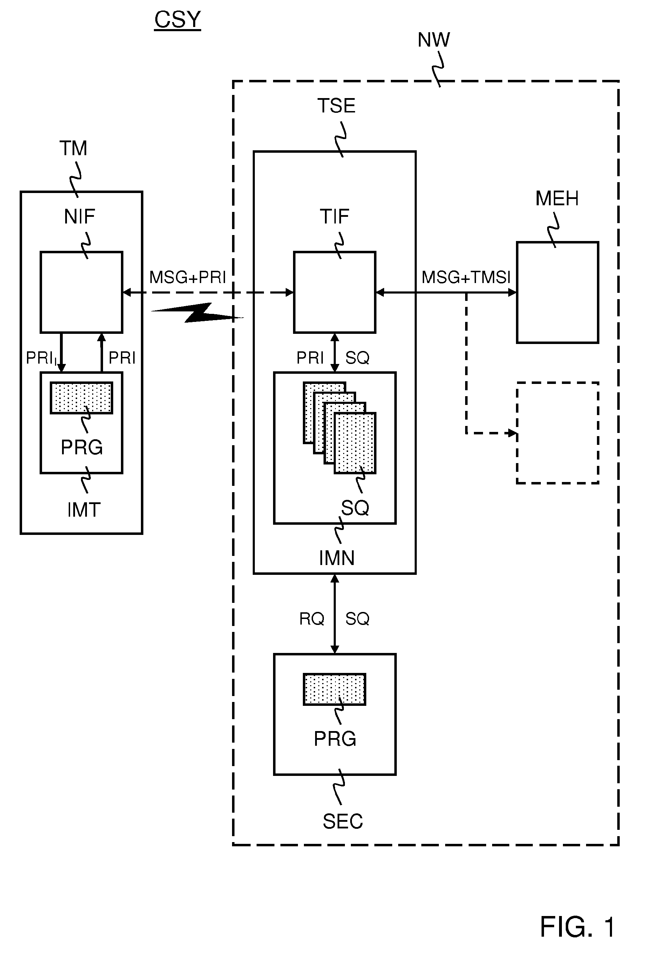

FIG. 1 schematically illustrates a communication system CSY, which comprises a network NW and a terminal TM. The communication system CSY typically includes numerous further terminals, which are not shown in FIG. 1 for reasons of simplicity and conciseness. The network NW and the terminal TM may exchange messages in a wireless fashion. The communication system CSY may thus be based on a mobile communication specification, such as, for example, a 3GPP specification. 3GPP is an acronym for the third Generation Partnership Project (3GPP) that unites telecommunications standards bodies. The Global System for Mobile Communications (GSM) is a 3GPP specification. In what follows, it is assumed that the communication system CSY is based on a mobile communication specification with various improvements in accordance with the invention. These improvements will be apparent from the description hereinafter.

The network NW comprises a terminal-servicing section TSE, a message handling section MEH, and a secure center SEC. The network NW may comprise further entities, which are not shown in FIG. 1 for reasons of simplicity and conciseness. The terminal-servicing section TSE may comprise, for example, a base station subsystem (BSS) in case the network NW is a GSM network, or a so-called evolved Node B (eNB) in case the network NW is an evolved UMTS Terrestrial Radio Access Network (EUTRAN), UMTS being an acronym of Universal Mobile Telecommunications System, which may also designate a more central or core subsystem in a network. The network NW will thus typically comprise respective terminal-servicing sections that cover respective geographical areas. A terminal may thus access the network NW via a terminal-servicing section that covers a geographical area in which the terminal is located.

In more detail, the terminal-servicing section TSE comprises a terminal interface module TIF and a network-sided identifier module IMN. The terminal interface module TIF typically comprises a radio communication interface and a data processing arrangement, which comprises one or more suitably programmed processors. The network-sided identifier module IMN typically comprises a data storage arrangement in which various different sequences of pseudorandom identifiers can be stored. A sequence SQ of pseudorandom identifiers is uniquely associated with the terminal TM illustrated in FIG. 1. Respective further sequences of pseudorandom identifiers are uniquely associated with respective further terminals.

The secure center SEC comprises a pseudorandom generator PRG that is capable of generating a sequence of pseudorandom identifiers for a particular terminal, such as the terminal TM illustrated in FIG. 1. The pseudorandom generator PRG may be generic in the sense that the pseudorandom generator PRG is used for generating respective sequences of pseudorandom identifiers for respective terminals. Alternatively, the pseudorandom generator PRG may be uniquely associated with the terminal TM illustrated in FIG. 1. In that case, the secure center SEC may comprise various different pseudorandom generators, each of which is uniquely associated with a particular terminal that uses the network NW.

The terminal TM comprises a network interface module NIF and a terminal-sided identifier module IMT. The network interface module NIF typically comprises a radio communication interface and a data processing arrangement, which comprises one or more suitably programmed processors. The terminal-sided identifier module IMT may be in the form of, for example, a SIM card, SIM being an acronym of subscriber identity module. The terminal-sided identifier module IMT comprises a pseudorandom generator PRG that is capable of generating the sequence SQ of pseudorandom identifiers that is uniquely associated with the terminal TM illustrated in FIG. 1. The pseudorandom generator PRG in the terminal-sided identifier module IMT thus corresponds with the pseudorandom generator PRG in the secure center SEC of the network NW.

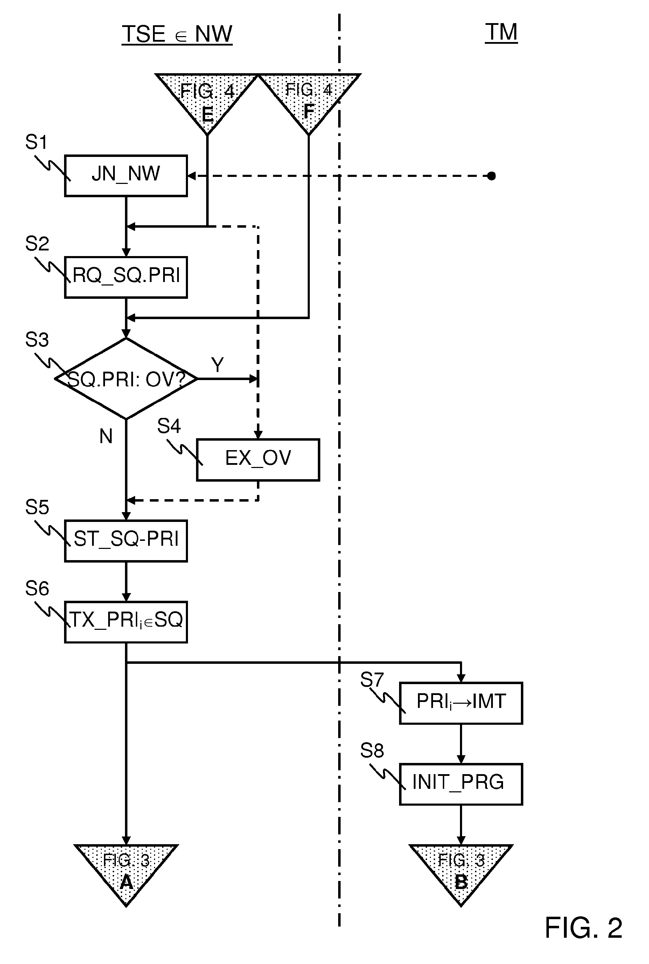

FIGS. 2-4 collectively illustrate a method of communication that involves the terminal TM and the network NW illustrated in FIG. 1. Each of these figures comprises a left-hand portion, which illustrates various steps that the terminal-servicing section TSE in the network NW carries out. A complementary right-hand portion illustrates various steps that the terminal TM carries out. The respective left-hand portions of FIGS. 2-4 may thus collectively be regarded as a flowchart representation of a set of instructions, which enables the terminal-servicing section TSE to carry out various operations described hereinafter with reference to those figures. Likewise, the respective right-hand portions of FIGS. 2-4 may collectively be regarded as a flowchart representation of a set of instructions, which enables the terminal TM to carry out various operations described hereinafter with reference to those figures.

FIG. 2 illustrates a series of steps that the terminal-servicing section TSE in the network NW and the terminal TM collectively carry out in an initialization phase of the method. In step S1, the terminal TM joins the network NW via the terminal-servicing section TSE illustrated in FIG. 1 (JN_NW). To that end, the terminal TM may transmit a request over a random access channel so as to initiate an access procedure. It is assumed that the terminal-servicing section TSE correctly processes this request and that a secure connection is established. A secure connection is understood to be a connection over which data is transmitted in a protected form by means of, for example, encryption. Conversely, an unsecure connection is understood to be a connection over which data is transmitted in the clear.

In step S2, the terminal-servicing section TSE sends a sequence request to secure center SEC in the network NW (RQ_SQ.PRI). The sequence request is a request for a sequence of pseudorandom identifiers that is uniquely associated with the terminal TM. Upon reception of the sequence request, the secure center SEC generates such a sequence of pseudorandom identifiers by means of, for example, the pseudorandom generator PRG illustrated in FIG. 1. It is assumed that the terminal-servicing section TSE correctly receives the sequence of pseudorandom identifiers that is uniquely associated with the terminal TM.

In step S3, the terminal-servicing section TSE verifies whether the following condition is satisfied, or not: each identifier from the sequence of pseudorandom identifiers is different from any pseudorandom identifier of any other set of identifiers associated with another terminal TM (SQ.PRI: OV?). In other words, the terminal-servicing section TSE checks if there is any overlap, or not, between the sequence of pseudorandom identifiers and other sequences of pseudorandom identifiers associated with other terminals. There is an overlap in case the sequence that is associated with the terminal TM comprises a pseudorandom identifier that is also present in another sequence that is associated with another terminal TM.

In case the aforementioned condition is not satisfied, which means that there is overlap, the terminal-servicing section TSE may deal with this in various different manners, two which are illustrated in FIG. 2. As a first option, the terminal-servicing section TSE may carry out step S2 anew, which means that the terminal-servicing section TSE requests a new sequence of pseudorandom identifiers from the secure center SEC. As a second option, the terminal-servicing section TSE may carry out step S4. In step S4, the terminal-servicing section TSE effectively excludes each pseudorandom identifier that constitutes overlap (EX_OV). That is, the terminal-servicing section TSE prevents any such pseudorandom identifier from being used for exchanging messages with the terminal TM. The terminal-servicing section TSE then subsequently carries out step S5.

In case the aforementioned condition is satisfied, which means that there is no overlap, the terminal-servicing section TSE subsequently carries out step S5 without any editing, as it were, of the sequence of pseudorandom identifiers. In step S5, the terminal-servicing section TSE stores the sequence of pseudorandom identifiers, as well as any exclusion that may have been applied in step S4 (ST_SQ-PRI).

In step S6, the terminal-servicing section TSE transmits over the secure connection an initial pseudorandom identifier from the sequence to the terminal TM (TX_PRI¡∈SQ), The terminal-servicing section TSE may further transmit a length indication pertaining to the sequence of pseudorandom identifiers. In case step S4 described hereinbefore has been carried out, the terminal servicing section TSE may also further transmit an indication of pseudorandom identifiers that have been excluded from the sequence for reasons of overlap. The initial pseudorandom identifier is thus the first pseudorandom identifier from the sequence that the terminal-servicing section TSE transmits to the terminal TM. The initial pseudorandom identifier may be regarded as a seed value for initializing the pseudorandom generator PRG in the terminal-sided identifier module IMT. This initialization may thus further include the aforementioned length indication and the indication of exclusions, if any.

The initial pseudorandom identifier may be included in a specific message, which comprises a message type identification signaling that the message comprises a pseudorandom identifier from a sequence that is new to the terminal TM. The terminal-servicing section TSE may transmit the initial pseudorandom identifier in a fashion that corresponds with a currently existing protocol that is used in a 3GPP specification for transmitting a temporary mobile subscriber identity. These remarks equally apply to the length indication and the indication of exclusions, if any, which may accompany the initial pseudorandom identifier. These indications may be included in the specific message jointly with the initial pseudorandom identifier, or these may be conveyed by means of one or more separate messages.

In step S7, the terminal TM receives the specific message that comprises the initial pseudorandom identifier and associated indications, if any, mentioned hereinbefore. The terminal TM recognizes, as it were, the specific message as such. As a result, the terminal TM transfers the initial pseudorandom identifier to the terminal-sided identifier module IMT (PRIᵢ→IMT). The terminal TM may do so by including the initial pseudorandom identifier in a specific command that the network interface module NIF applies to the terminal-sided identifier module IMT. The specific command may instruct the terminal-sided identifier module IMT to initialize the pseudorandom generator PRG on the basis of the initial pseudorandom identifier and associated indications, if any, mentioned hereinbefore. In step S8, the terminal-sided identifier module IMT indeed initializes the pseudorandom generator PRG accordingly (INIT_PRG). That is, the pseudorandom generator PRG is configured to generate the same sequence of pseudorandom identifiers that the terminal-servicing section TSE has stored in step S5. After step S8, the terminal-servicing section TSE and the terminal TM both dispose of the same sequence of pseudorandom identifiers, as well as information related thereto, which can then be used for exchanging messages whenever a secure connection is not yet established.

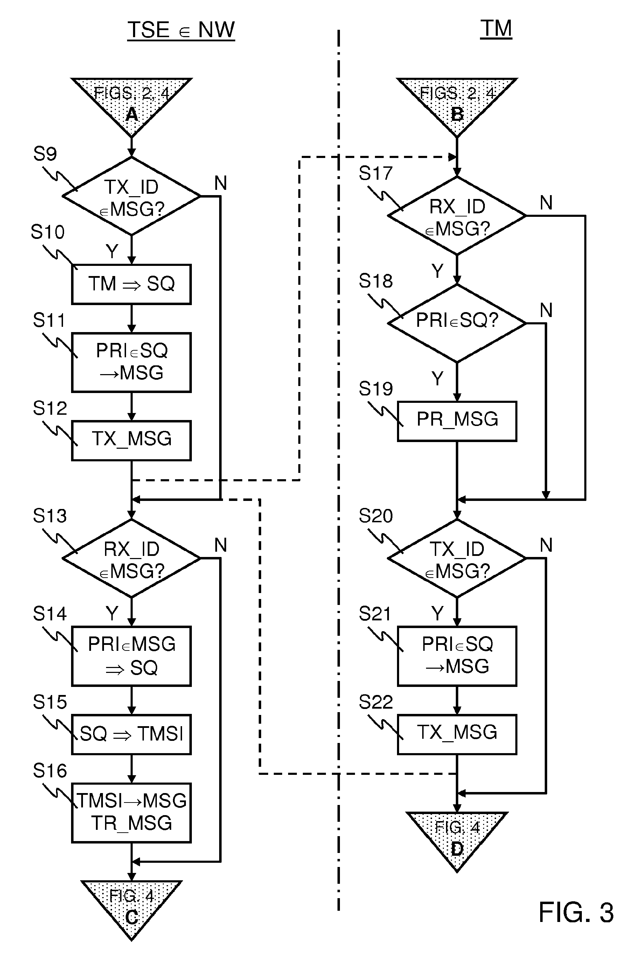

FIG. 3 illustrates a series of steps that the terminal-servicing section TSE in the network NW and the terminal TM collectively carry out in a communication phase of the method. More specifically, the terminal TM and the network NW carry out these steps for exchanging messages over unsecure connections. In step S9, the terminal-servicing section TSE determines whether a message including an identifier needs to be transmitted to the terminal TM, or not (TX_ID∈MSG?). For example, the terminal-servicing section TSE may need to transmit a message including an identifier if the message concerns a channel assignment following a request thereto from the terminal TM in a call setup procedure. In case the terminal-servicing section TSE needs to transmit a message including an identifier to the terminal TM, the terminal-servicing section TSE carries out steps S10-S12. Otherwise, the terminal-servicing section TSE may skip these steps and subsequently carries out step S 13, which will be described hereinafter.

In step S 10, the terminal-servicing section TSE accesses the network-sided identifier module IMN and effectively selects the sequence SQ of pseudorandom identifiers that is uniquely associated with the terminal TM (TM => SQ). The terminal-servicing section TSE may select the sequence on the basis of a temporary mobile subscriber identity that has been assigned to the terminal TM by another entity in the network NW. In step **S11,** the terminal-servicing section TSE then selects a pseudorandom identifier from the sequence that has been selected in step S10 (PRI∈SQ→MSG). The pseudorandom identifier that is selected has preferably not yet been selected before. This can be achieved by selecting the pseudorandom identifier subsequent to the most recently selected pseudorandom identifier, like a next, new element in a list.

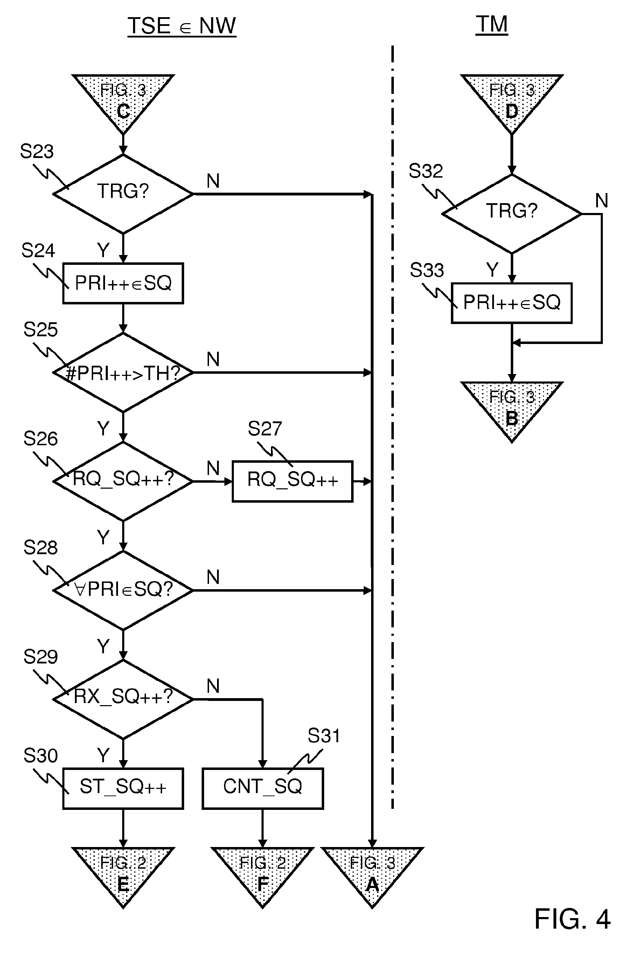

The pseudorandom identifier that is selected in step S 11 preferably corresponds with the pseudorandom identifier that the pseudorandom generator PRG in the terminal-sided identifier module IMT currently generates, or is about to generate as subsequent in the sequence. This implies some form of synchronization between the network NW and the terminal TM with regard to use of pseudorandom identifiers. An example of such synchronization will be described hereinafter with reference to FIG. 4. In step 512, the terminal-servicing section TSE transmits to the terminal TM a message that includes the pseudorandom identifier that has been selected.

In step S 13, the terminal-servicing section TSE determines whether a message that includes an identifier has been received, or not (RX_ID∈MSG?). For example, the terminal-servicing section TSE may receive a message that includes an identifier if the message forms part of a call setup procedure. The terminal-servicing section TSE may thus regard a particular message in a call setup procedure, as a message that includes an identifier. In any case, the identifier is a pseudorandom identifier from a sequence that has uniquely been associated with the terminal that has transmitted the message concerned. In case the terminal-servicing section TSE receives a message including an identifier, the terminal-servicing section TSE carries out steps S14-S16. Otherwise, the terminal-servicing section TSE may skip these steps and subsequently carries out step S23, which will be described hereinafter with reference to FIG. 4.

In step S 14, the terminal-servicing section TSE searches in the network-sided identifier module IMN to find the sequence of pseudorandom identifiers that comprises the pseudorandom identifier that is present in the message received (PRI∈MSG ⇒ SQ). Accordingly, the terminal-servicing section TSE identifies the terminal that has transmitted the message by finding the sequence uniquely associated with this terminal. This search and identify process on the basis of the pseudorandom identifier received may be facilitated if, for respective sequences, the terminal-servicing section TSE keeps track of use of pseudorandom identifiers. This allows the terminal-servicing section TSE to determine the respective pseudorandom identifiers in the respective sequences that are expected to be received. For example, the terminal-servicing section TSE may have determined that the N first pseudorandom identifiers of a given sequence have already been used and expect to receive the N+1-th pseudorandom identifier of that sequence, or eventually the N+2-th, N+3-th, etc. pseudorandom identifier, a few positions further.

In step S 15, the terminal-servicing section TSE may retrieve the temporary mobile subscriber identity that belongs to the terminal that has been identified on the basis of the pseudorandom identifier (SQ ⇒ TMSI). To that end, the terminal-servicing section TSE may comprise, for example, a database of temporary mobile subscriber identities of terminals that the terminal-servicing section TSE is servicing. This database may form part of, for example, the network-sided identifier module IMN. In any case, the temporary mobile subscriber identity constitutes a network-internal identifier of the terminal TM. In step 516, the terminal-servicing section TSE transfers the message with the temporary mobile subscriber identity to another network entity, which may be a message handling section MEH in the network NW (TMSI→MSG; TR_MSG).

The terminal-servicing section TSE thus effectively replaces a pseudorandom identifier in a message received by the temporary mobile subscriber identity that is associated with the terminal that has been identified on the basis of the pseudorandom identifier. The same applies for a communication in an opposite direction. That is, the terminal-servicing section TSE effectively replaces a temporary mobile subscriber identity, which is conventionally used for exchanging messages between a terminal and the network NW, by a sequence of pseudorandom random identifiers, which are successively used for exchanging these messages, which would conventionally comprise the temporary mobile subscriber identity.

In step S 17, the terminal TM determines whether a message that includes an identifier has been received, or not (RX_ID∈MSG?). The terminal-servicing section TSE may transmit such a message to the terminal TM in step S12, as described hereinbefore. The identifier is thus a pseudorandom identifier from the sequence that has uniquely been associated with the terminal TM. In case the message includes the pseudorandom identifier, the terminal TM carries out steps S18-S19. In case the message does not include any identifier, the terminal-servicing section TSE may skip these steps and subsequently carries out step S20, which will be described hereinafter.

In step 518, the terminal TM determines whether the pseudorandom identifier belongs to the sequence SQ that has uniquely been associated with the terminal TM, or not (PRI∈SQ?). This determination is facilitated if the pseudorandom identifier in the message corresponds with the pseudorandom identifier that the pseudorandom generator PRG in the terminal-sided identifier module IMT currently provides, or is about to generate as subsequent in the sequence. Otherwise, the pseudorandom generator PRG may need to go through the sequence in a step by step fashion in order to allow the aforementioned determination to be made.

In case the pseudorandom identifier does belong to the sequence SQ that has uniquely been associated with the terminal TM, the terminal TM processes the message received in step S 19. As mentioned hereinbefore, the message may concern a channel assignment in a call setup procedure. In that case, the terminal TM configures the network interface module NIF so that messages are transmitted to the terminal TM, and received from the terminal TM, via a channel that has been assigned to the terminal TM according to the message. In case the pseudorandom identifier in the message does not belong to the sequence SQ that has uniquely been associated with the terminal TM, the terminal TM effectively ignores the message.

In step S20, the terminal TM determines whether a message including an identifier needs to be transmitted to the terminal-servicing section TSE, or not (TX_ID∈MSG?). For example, the terminal TM may need to transmit a message including an identifier if the message concerns a request for a channel assignment in a call setup procedure. In case the terminal TM needs to transmit a message including an identifier to the terminal-servicing section TSE, the terminal TM carries out steps S21-S22. Otherwise, the terminal TM may skip these steps and subsequently carries out step S32, which will be described hereinafter with reference to FIG. 4.

In step S21, the terminal TM obtains a pseudorandom identifier from the pseudorandom generator PRG in the terminal-sided identifier module IMT ((PRI∈SQ→MSG). Subsequently, the terminal TM includes the pseudorandom identifier in the message. In step S22, the terminal TM transmits the message with the pseudorandom identifier, which allows the terminal-servicing section TSE to detect that the message originates from the terminal TM (TX_MSG).

FIG. 4 illustrates a series of steps that the terminal-servicing section TSE in the network NW and the terminal TM collectively carry out in a communication phase of the method. More specifically, the terminal TM and the network NW carry out these steps for managing pseudorandom identifiers that are used for exchanging messages over unsecure connections. It is assumed that the terminal-servicing section TSE maintains a pointer for the sequence SQ of pseudorandom identifiers that is uniquely associated with the terminal TM. The pointer points to a particular pseudorandom identifier in the sequence, namely the pseudorandom identifier that should currently be used for exchanging messages. For example, referring to step S 11 described hereinbefore, the pointer points to the pseudorandom identifier in the sequence that is included in the message to be transmitted to the terminal TM. Referring to step S14 described hereinbefore, the pointer points to the pseudorandom identifier in the sequence that is expected to be included in the message received from the terminal TM. This facilitates identification of the terminal TM as origin of the message, as explained hereinbefore with regard to this step S 14.

In step S23, the terminal-servicing section TSE verifies whether a triggering event has occurred, or not (TRG?). A triggering event is typically an event that should cause a subsequent pseudorandom identifier in the sequence to be used for exchanging messages. The triggering event may therefore be use of a pseudorandom identifier in a message transmitted from the terminal TM to network NW, or vice versa. Once a pseudorandom identifier has been used, it is preferable that another, not yet used pseudorandom identifier from the sequence is used for a subsequent transmission of a message that should comprise an identifier. In case a triggering event has occurred, the terminal-servicing section TSE carries out step S24 and steps subsequent thereto. In case no triggering event has occurred, the terminal-servicing section TSE effectively skips these steps and subsequently carries out step S9 anew, as well as steps subsequent thereto, which have been described hereinbefore with reference to FIG. 3.

In step S24, the terminal-servicing section TSE causes the pointer of the sequence to move one position forward (PRI++∈SQ). This implies use of a subsequent pseudorandom identifier in the sequence, which pseudorandom identifier has preferably not been used before. In step S25, the terminal-servicing section TSE verifies whether the following condition applies, or not: a given number of pseudorandom identifiers from the sequence have been used for exchanging messages between the terminal TM and the network NW (#PRI++>TH?). The given number, which effectively constitutes a threshold, is preferably slightly less than the total number of pseudorandom identifiers in the sequence. In that case, it means that nearly all the pseudorandom identifiers of the sequence have been used if the aforementioned condition applies. In that case, the terminal-servicing section TSE subsequently carries out step S26. Otherwise, the terminal-servicing section TSE effectively returns to step S9, which is illustrated in FIG. 3.

In step S26, the terminal-servicing section TSE verifies whether a request for a new sequence the pseudorandom identifiers has already been submitted to the secure center SEC, or not (RQ_SQ++?). If not, the terminal-servicing section TSE submits such a request to the secure center SEC in step S27 (RQ_SQ++). Subsequently, the terminal-servicing section TSE effectively returns to step S9, which is illustrated in FIG. 3.

In case a request for a new sequence has already been submitted, the terminal-servicing section TSE carries out step S28. In step S28, the terminal-servicing section TSE verifies whether all pseudorandom identifiers in the sequence have been used for exchanging messages (∀PRI∈SQ?). If this is not yet the case, the terminal-servicing section TSE may continue using pseudorandom identifiers from the sequence by returning to step S9, which is illustrated in FIG. 3. In case all pseudorandom identifiers have been used, the terminal-servicing section TSE carries out step S29.

In step S29, the terminal-servicing section TSE verifies whether the new sequence of pseudorandom identifiers, which has been requested in step S27, has been received, or not (RX_SQ++?). In case in new sequence has been received, the terminal-servicing section TSE initiates use of this new sequence in step S30. To that end, the terminal-servicing section TSE carries out anew step S2, as well as steps subsequent thereto, which have been described hereinbefore with reference to FIG. 2. In doing so, the terminal TM will receive an initial pseudorandom identifier from the new sequence and use this initial pseudorandom identifier to configure the pseudorandom generator PRG in the terminal-sided identifier module IMT. Accordingly, the pseudorandom generator PRG will be able to generate the new sequence.

In case a new sequence has not been received, the terminal-servicing section TSE may continue using the sequence in step S31. The terminal-servicing section TSE then carries out anew step S3, as well as steps subsequent thereto. The terminal-servicing section TSE thus effectively re-utilizes the sequence that was previously received from the secure central SEC. This reutilization starts with the verification in step S3, which relates to overlap. Overlap conditions may have changed since the previous verification in step S3. In any case, re-utilizing the sequence, which has come to an end, constitutes a safety measure that allows avoiding interruption in service when a new sequence is not timely received. This sequence reutilization may stop when the new sequence has arrived. The sequence reutilization may thus be partial.

In step S32, the terminal TM verifies whether a triggering event has occurred, or not (TRG?). As mentioned hereinbefore, the triggering event may be use of a pseudorandom identifier in a message that the terminal TM transmits to the network NW, or vice versa. In case a triggering event has occurred, the terminal TM carries out step S33. In step S33, the terminal TM causes the pseudorandom generator PRG in the terminal-sided identifier module IMT to generate a subsequent pseudorandom identifier in the sequence. The subsequent pseudorandom identifier is then available for use in transmitting or receiving in message, whichever applies. In case no triggering event has occurred, the terminal-servicing section TSE effectively skips step S33 and subsequently carries out step S17 anew, as well as subsequent steps, which have been described hereinbefore with reference to FIG. 3.

For example, let it be assumed that, in a call setup procedure, the terminal TM transmits a request for a channel assignment to the network NW via a random access channel. The request is a message that includes a pseudorandom identifier. The transmission of the request thus constitutes a triggering event. Accordingly, the pseudorandom generator PRG generates a subsequent pseudorandom identifier and makes this available. In case the terminal TM transmits anew such a request because, for example, there was no acknowledgment, the terminal TM uses the subsequent pseudorandom identifier, and so on.

### FINAL REMARKS

The detailed description hereinbefore with reference to the drawings is merely an illustration of the invention and the additional features, which are defined in the claims. The invention can be implemented in numerous different ways. In order to illustrate this, some alternatives are briefly indicated.

The invention may be applied to advantage in numerous types of products or methods related to communication involving a network and a terminal. A communication according to a 3GPP specification is merely an example. As another example, the invention may be applied to advantage in so-called WiFi and WiMAX communications. In WiFi communications, MAC addresses are conventionally used as identifiers (MAC is an acronym for medium access control). A MAC address could be replaced by a set of identifiers in accordance with the invention. In WiMAX communications, connection identifiers (CID) are conventionally used. A connection identifier can be replaced by a set of identifiers in accordance with the invention.

There are numerous ways of providing the network and the terminal with a definition of a set of identifiers. The set of identifiers need not necessarily constitute a pseudorandom sequence. That is, the identifiers need not necessarily have a particular; secret relationship with each other; the identifiers may have been arbitrarily selected. The set of identifiers may be stored in the terminal, rather than being generated by means of a pseudorandom generator. The set of identifiers may be transmitted to the terminal in an encrypted form. The terminal may receive the set of identifiers all in once, or on a piece by piece basis. For example, the terminal may receive one or more identifiers during the communication session, which identifiers are to be used in a subsequent communication session. The terminal may also receive one or more links that allow retrieval of the set of identifiers all in once, or piece by piece. The set of identifiers may comprise two types of identifiers: identifiers that are to be used for uplink messages, which the terminal transmits to the network, and identifiers that are to be used for downlink messages, which the network transmits to the terminal.

The term "terminal" should be understood in a broad sense. The term embraces any entity capable of establishing a communication via a network. The term "terminal-servicing section" should be understood in a broad sense. The term embraces any entity, or group of entities, capable of enabling a terminal to communicate via a network, such as, for example, a base station and a mobile switching center. The term "communication session" should be understood in a broad sense. The term embraces any form of establishing and maintaining a communication between two terminals via a network.

In general, there are numerous different ways of implementing the invention, whereby different implementations may have different topologies. In any given topology, a single module may carry out several functions, or several modules may jointly carry out a single function. In this respect, the drawings are very diagrammatic. For example, referring to FIG. 1, the terminal interface module TIF and the network-sided identifier module IMN may form part of a single processing module. Conversely, the terminal interface module TIF may comprise various distinct parts that could be regarded as (sub) modules. The same applies to other modules that have been described.

There are numerous functions that may be implemented by means of hardware or software, or a combination of both. A description of a software-based implementation does not exclude a hardware-based implementation, and vice versa. Hybrid implementations, which comprise one or more dedicated circuits as well as one or more suitably programmed processors, are also possible. For example, various functions described hereinbefore with reference to the figures may be implemented by means of one or more dedicated circuits, whereby a particular circuit topology defines a particular function.

There are numerous ways of storing and distributing a set of instructions, that is, software, which allows communication in accordance with the invention. For example, software may be stored in a suitable medium, such as, for example, a magnetic disk, an optical disk, or a memory circuit. A medium in which software is stored may be supplied as an individual product or together with another product, which may execute the software. Such a medium may also be part of a product that enables software to be executed. Software may also be distributed via communication networks, which may be wired, wireless, or hybrid. For example, software may be distributed via the Internet. Software may be made available for download by means of a server. Downloading may be subject to a payment.

The remarks made hereinbefore demonstrate that the detailed description with reference to the drawings is an illustration of the invention rather than a limitation. The invention can be implemented in numerous alternative ways that are within the scope of the appended claims. All changes that come within the meaning and range of equivalency of the claims are to be embraced within their scope. Any reference sign in a claim should not be construed as limiting the claim. The word "comprising" does not exclude the presence of other elements or steps than those listed in a claim. The word "a" or "an" preceding an element or step S does not exclude the presence of a plurality of such elements or steps. The mere fact that respective dependent claims define respective additional features, does not exclude combinations of additional features other than those reflected in the claims.

## Claims

1. A method of communication that involves a network (NW) and a terminal (TM), the method comprising:
- an initialization phase (FIG. 2) in which the network and the terminal are provided with a definition of a set of identifiers (SQ) that is uniquely associated with the terminal and
- a communication phase (FIGS. 3, 4) in which respective identifiers of the set are used for respective communication sessions of the terminal via the network, the network recognizing a received message comprising an identifier from the set as a message originating from the terminal, the terminal recognizing a received message comprising an identifier from the set as a message addressed to the terminal.

2. A method according to claim 1, wherein, in the initialization phase, the set of identifiers is defined as a pseudorandom sequence.

3. A method according to claim 2, wherein, in the initialization phase, the terminal receives a communication including an identifier from the pseudorandom sequence of identifiers (S7) and initializes a pseudorandom generator (PRG) on the basis of this communication (S8), which enables the pseudorandom generator to generate the pseudorandom sequence of identifiers.

4. A method according to claim 2, wherein, in the initialization phase, a secure center (SEC) generates the pseudorandom sequence of identifiers, and transmits this pseudorandom sequence to a terminal-servicing section (TSE) of the network (NW) via which the terminal (TM) accesses the network.

5. A method according to claim 1, wherein, in the communication phase, a terminal-servicing section (TSE) of the network (NW) replaces an identifier (PRI) of the set that the terminal (TM) has used for transmitting a message, by a network-internal identifier (TMSI) that is maintained throughout respective communication sessions, the terminal-servicing section transferring the message with the network-internal identifier to another, message handling section (MEH) of the network.

6. A method according to claim 1, the method comprising:
a request step (S27) in which a request for a new set of identifiers is generated when a given number of identifiers from a current set have been used for messages exchanged between the terminal (TM) and the network (NW).

7. A method according to claim 6, wherein, in the communication phase, identifiers from the current set are reused (S31) in case a new set of identifiers has not been provided when all the identifiers of the current set have been used, and wherein otherwise identifiers from the new set are used (S30) at the latest when all the identifiers of the current set have been used.

8. A method according to claim 1, the method comprising.
- a verification step (S3) in which verification is made whether the following condition is satisfied, or not: each identifier from the set of identifiers is different from any identifier of any other set of identifiers associated with another terminal (TM).

9. A method according to claim 8, wherein, in case the condition is not satisfied, a new set of identifiers is requested (S2) for replacement of the set of identifiers for which the condition is not satisfied.

10. A method according to claim 8, wherein, in case the condition is not satisfied, the set of identifiers for which the condition is not satisfied is partially used in the communication phase, whereby an identifier that corresponds with an identifier from another set is excluded from use (S4) for messages exchanged between the terminal (TM) and the network (NW) in the communication phase.

11. A method according to claim 1, wherein, in the communication phase, a predefined trigger event causes a subsequent identifier from the set to be used (S23, S32) for messages exchanged between the terminal (TM) and the network (NW).

12. A terminal-servicing section (TSE) of a network (NW) via which a terminal (TM) can establish communication sessions, the terminal-servicing section comprising:
- an identifier module (IMN) adapted to receive and at least temporarily retain a definition of a set of identifiers (SQ) that is uniquely associated with the terminal; and
- a communication module (TIF) adapted to use respective identifiers of the set for respective communication sessions of the terminal via the network, the communication module recognizing a received message comprising an identifier from the set as a message originating from the terminal, and applying an identifier from the set to a transmitted message addressed to the terminal.

13. A terminal (TM) that can establish communication sessions via a network (NW), the terminal comprising:
- an identifier module (IMT) adapted to receive and at least temporarily retain a definition of a set of identifiers (SQ) that is uniquely associated with the terminal; and
- a communication module (NIF) adapted to use respective identifiers of the set for respective communication sessions of the terminal via the network, the communication module recognizing a received message comprising an identifier from the set as a message addressed to the terminal, and applying an identifier from the set to a transmitted message.

14. An identifier module (IMT) for use in a terminal (TM) as claimed in claim 13, the identifier module comprising a pseudorandom generator (PRG) adapted to generate the set of identifiers (SQ) as a pseudorandom sequence on the basis of an initial identifier.

15. A computer program product comprising a set of instructions that enables a processor, which is capable of executing the set of instructions, to carry out at least a part of the method according to claim 1, in at least one of the following entities: the network (NW) and the terminal (TM).
